# EUROPEAN PATENT APPLICATION

(11) **EP 3 920 184 A1**
(43) Date of publication of application: **08.12.2021**
(21) Application number: 20749642.3
(22) Date of filing: 17.01.2020
(51) Int. Cl.: G11B 20/10, G06F 3/06, G06F 16/13

(54) **RECORDING DEVICE, RECORDING METHOD, RECORDING PROGRAM, AND MAGNETIC TAPE**

(30) Priority: 28.01.2019 JP 2019012251
(71) Applicant: FUJIFILM Corporation, Tokyo 106-8620 (JP)
(72) Inventor: KONDO, Michitaka, Tokyo 107-0052 (JP)
(74) Representative: Klunker IP Patentanwälte PartG mbB
(86) International application number: PCT/JP2020/001577
(87) International publication number: WO 2020/158463

(57) **Abstract**

A recording device includes a first derivation unit that derives relevance of positions between different virtual blocks on a recording medium, a second derivation unit that derives inter-data relevance representing a possibility that plural items of data to be recorded on the recording medium are read out in parallel, a third derivation unit that uses a difference between the relevance of the positions and the inter-data relevance to derive a block for recording each of the plural items of data, and a control unit that performs control of recording the plural items of data on the recording medium according to the block derived by the third derivation unit for each of the plural items of data.

## Description

### Technical Field

The present application claims the priority of JP2019-012251 filed on January 28, 2019 the full text of which is incorporated herein by reference.

The present disclosure relates to a recording device, a recording method, a recording program, and a magnetic tape.

### Related Art

In the related art, a technique has been disclosed in which data is grouped based on header information of the data to be recorded and data belonging to the same group is recorded on the same recording medium (refer to, for example, JP2014-191524A).

A technique has been disclosed in which data is grouped according to an access frequency of the data and recording is made on a recording medium in order from a group having the highest access frequency (refer to, for example, JP1996-263335A (JP-H08-263335A)).

### SUMMARY OF INVENTION

### Technical Problem

However, in the techniques described in the above documents, a plurality of data to be recorded are grouped and the data is recorded on the recording medium in a group unit. For this reason, it may not be possible to deal with the belonging of one piece of data to a plurality of groups. In this case, it may not be possible to shorten a reading time of the data recorded on the recording medium.Solution to Problem

An object of the present disclosure is to provide a recording device, a recording method, a recording program, and a magnetic tape capable of shortening a reading time of data recorded on a recording medium.

A recording device according to a first aspect of the present disclosure comprises a first derivation unit that derives relevance of positions between different virtual blocks on a recording medium, a second derivation unit that derives inter-data relevance representing a possibility that a plurality of items of data to be recorded on the recording medium are read out in parallel, a third derivation unit that uses a difference between the relevance of the positions and the inter-data relevance to derive a block for recording each of the plurality of items of data, and a control unit that performs control of recording the plurality of items of data on the recording medium according to the block derived by the third derivation unit for each of the plurality of items of data.

In the recording device of the aspect, the relevance of the positions may have a larger value as a time required to read the data recorded in the different blocks is shorter in a case in which a reproducing element that reads the data recorded on the recording medium is present at a predetermined position. The inter-data relevance may have a larger value as the possibility that the plurality of items of data are read out in parallel is higher. The third derivation unit may derive the block having a minimum value corresponding to the difference.

In the recording device of the aspect, the relevance of the positions may have a larger value as an average value of the times is smaller in a case in which the reproducing element is present at each of a plurality of different predetermined positions.

In the recording device of the aspect, in a case where there is data having the inter-data relevance equal to or higher than a threshold value for a plurality of data, the first derivation unit may derive the relevance of the positions and the second derivation unit may derive the inter-data relevance on an assumption that the data having the inter-data relevance equal to or higher than the threshold value is duplicated.

In the recording device of the aspect, the recording medium may be a magnetic tape.

A recording method according to a second aspect of the present disclosure executed by a computer performs processing of deriving relevance of positions between different virtual blocks on a recording medium, deriving inter-data relevance representing a possibility that a plurality of items of data to be recorded on the recording medium are read out in parallel, using a difference between the relevance of the positions and the inter-data relevance to derive a block for recording each of the plurality of items of data, and performing control of recording the plurality of items of data on the recording medium according to the block derived for each of the plurality of items of data.

A recording program according to a third aspect of the present disclosure causes a computer to perform a process of deriving relevance of positions between different virtual blocks on a recording medium, deriving inter-data relevance representing a possibility that a plurality of items of data to be recorded on the recording medium are read out in parallel, using a difference between the relevance of the positions and the inter-data relevance to derive a block for recording each of the plurality of items of data, and performing control of recording the plurality of items of data on the recording medium according to the block derived for each of the plurality of items of data.

A magnetic tape according to a fourth aspect of the present disclosure is configured such that a plurality of data is recorded according to a block for recording each of the plurality of data, which is derived using a difference between relevance of positions between different virtual blocks on the magnetic tape and inter-data relevance representing a possibility that the plurality of data to be recorded on the magnetic tape are read out in parallel.

A recording device according to a fifth aspect of the present disclosure comprises a memory that stores a command to cause a computer to execute and a processor configured to execute the stored command. The processor derives relevance of positions between different virtual blocks on a recording medium, derives inter-data relevance representing a possibility that a plurality of items of data to be recorded on the recording medium are read out in parallel, uses a difference between the relevance of the positions and the inter-data relevance to derive the block for recording each of the plurality of items of data, and performs control of recording the plurality of items of data on the recording medium according to the block derived for each of the plurality of items of data.

### Effects of Invention

According to the present disclosure, it is possible to shorten the reading time of the data recorded on the recording medium.

### BRIEF DESCRIPTION OF THE DRAWINGS

Fig. 1 is a block diagram showing an example of a configuration of a recording/reading system according to each embodiment.
Fig. 2 is a plan view of an example of a magnetic tape according to each embodiment.
Fig. 3 is a block diagram showing an example of a hardware configuration of an information processing device according to each embodiment.
Fig. 4 is a table showing an example of a reading log according to each embodiment.
Fig. 5 is a block diagram showing an example of a functional configuration of the information processing device according to each embodiment.
Fig. 6 is a diagram for describing processing of deriving inter-block relevance.
Fig. 7 is a table showing an example of the inter-block relevance.
Fig. 8 is a table showing an example of inter-data relevance.
Fig. 9 is a schematic diagram showing an example of a network structure based on the inter-block relevance.
Fig. 10 is a schematic diagram showing an example of a network structure based on the inter-data relevance.
Fig. 11 is a table showing an example of a difference in the network structures.
Fig. 12 is a schematic diagram showing an example of the network structure based on the inter-data relevance.
Fig. 13 is a diagram showing an example of an order of changing a virtual block in which data is disposed.
Fig. 14 is a diagram for describing a recording order of data.
Fig. 15 is a flowchart showing an example of recording processing according to a first embodiment.
Fig. 16 is a table showing an example of the inter-data relevance.
Fig. 17 is a table showing an example of the inter-block relevance.
Fig. 18 is a schematic diagram showing an example of the network structure based on the inter-block relevance.
Fig. 19 is a table showing an example of the inter-data relevance.
Fig. 20 is a schematic diagram showing an example of the network structure based on the inter-data relevance.
Fig. 21 is a table showing an example of the difference in the network structures.
Fig. 22 is a schematic diagram showing an example of the network structure based on the inter-data relevance.
Fig. 23 is a table showing an example of the difference in the network structures.
Fig. 24 is a schematic diagram showing an example of the network structure based on the inter-data relevance.
Fig. 25 is a table showing an example of the difference in network structures.
Fig. 26 is a flowchart showing an example of recording processing according to a second embodiment.

### DESCRIPTION OF EMBODIMENTS

Hereinafter, an embodiment for implementing a technique of the present disclosure will be described in detail with reference to drawings.

### [First Embodiment]

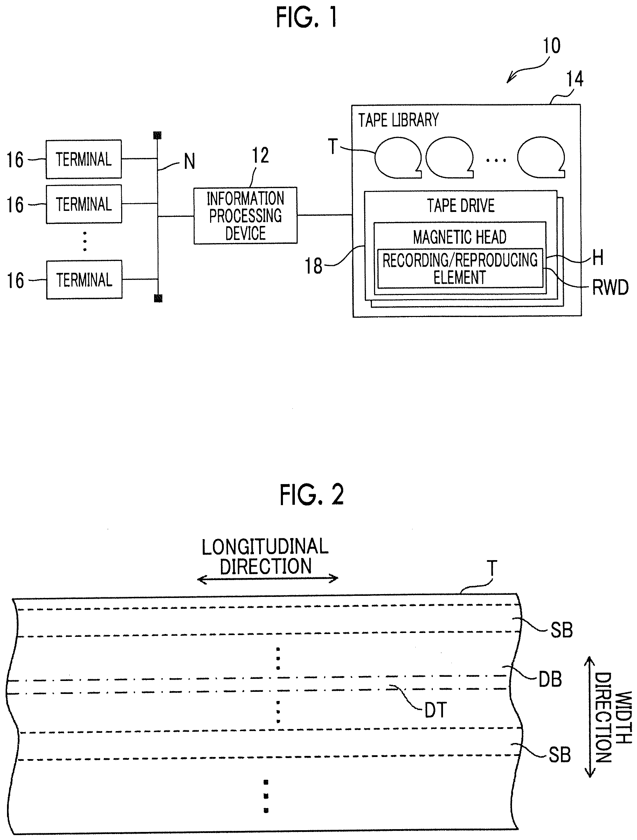

First, a configuration of a recording/reading system 10 according to the present embodiment will be described with reference to Fig. 1. As shown in Fig. 1, the recording/reading system 10 includes an information processing device 12 and a tape library 14. The tape library 14 is connected to the information processing device 12. In addition, the information processing device 12 and a plurality of terminals 16 are connected to a network N and can communicate through the network N.

The tape library 14 comprises a plurality of slots (not shown) and a plurality of tape drives 18, and a magnetic tape T as an example of a recording medium is stored in each slot. An example of the magnetic tape T includes a linear tape-open (LTO) tape.

The tape drive 18 comprises a magnetic head H. The magnetic head H comprises a recording/reproducing element RWD that records and reproduces data on the magnetic tape T. The recording/reproducing element RWD is an example of a reproducing element that reads the data recorded on the recording medium according to the disclosed technique.

In a case where the information processing device 12 writes or reads the data on the magnetic tape T, the magnetic tape T to be written or read is loaded from the slot into any one of the tape drives 18. In a case where the information processing device 12 completes the writing or reading for the magnetic tape T loaded into the tape drive 18, the magnetic tape T is unloaded from the tape drive 18 to the originally stored slot.

Next, a configuration of the magnetic tape T according to the present embodiment will be described with reference to Fig. 2. As shown in Fig. 2, a plurality of servo bands SB are formed on the magnetic tape T along a longitudinal direction of the magnetic tape T. The longitudinal direction of the magnetic tape T corresponds to a drawing-out direction of the magnetic tape T. Further, the plurality of servo bands SB are formed so as to be arranged at equal intervals in a width direction of the magnetic tape T. A servo pattern for positioning the magnetic head H in the width direction is recorded in the servo band SB.

A data band DB in which the data is recorded is formed between adjacent servo bands SB. The data band DB comprises a plurality of data track DTs in which the recording/reproducing element RWD records and reproduces the data.

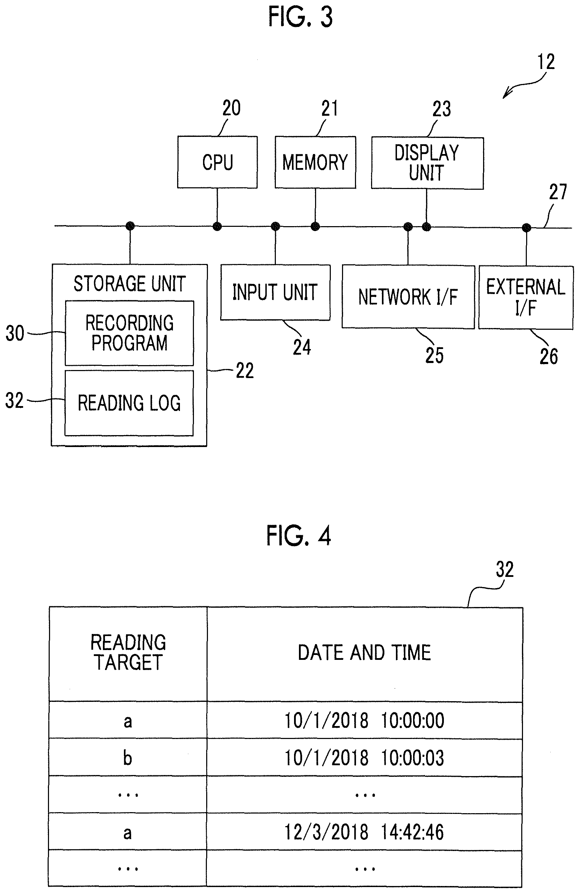

Next, a hardware configuration of the information processing device 12 according to the present embodiment will be described with reference to Fig. 3. As shown in Fig. 3, the information processing device 12 includes a central processing unit (CPU) 20, a memory 21 as a temporary storage area, and a nonvolatile storage unit 22. The information processing device 12 includes a display unit 23 such as a liquid crystal display, an input unit 24 such as a keyboard and a mouse, a network interface (I/F) 25 connected to the network N, and an external I/F 26 connected to the tape library 14. The CPU 20, the memory 21, the storage unit 22, the display unit 23, the input unit 24, the network I/F 25, and the external I/F 26 are connected to a bus 27.

The storage unit 22 is formed by a hard disk drive (HDD), a solid state drive (SSD), a flash memory, and the like. The storage unit 22 as a storage medium stores a recording program 30. The CPU 20 reads out the recording program 30 from the storage unit 22, develops the program in the memory 21, and executes the developed recording program 30. An example of the information processing device 12 includes a server computer. The information processing device 12 is an example of a recording device that records the data on the magnetic tape T. An example of the data recorded on the magnetic tape T includes medical data compliant to a predetermined standard such as digital imaging and communications in medicine (DICOM).

The storage unit 22 stores a data group read by each terminal 16. The storage unit 22 stores a reading log 32. Fig. 4 shows an example of the reading log 32. As shown in Fig. 4, the reading log 32 stores identification information of the data read by the terminal 16 (denoted as "reading target" in the example of Fig. 4) in association with a date and time that the data has been read. The date and time that the data has been read in the reading log 32 may be, for example, a date and time that the data reading is started or a date and time that the data reading is completed. The date and time that the data has been read in the reading log 32 may be both the date and time that the data reading is started or the date and time that the data reading is completed.

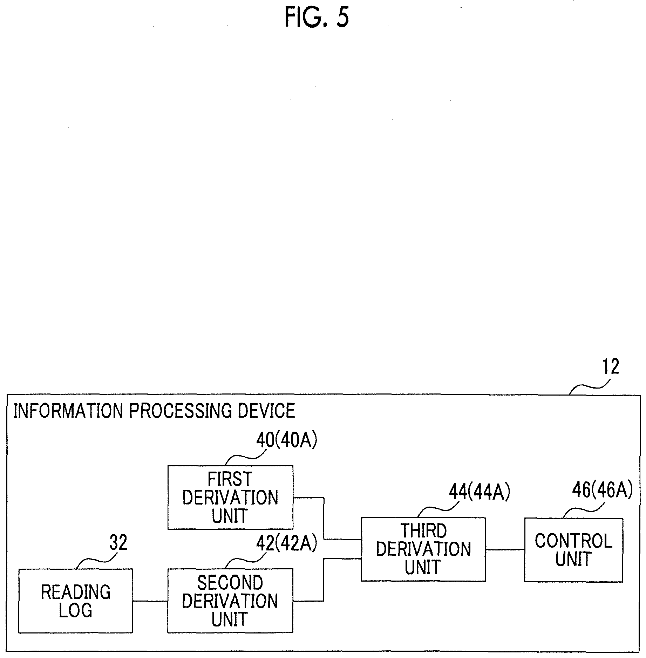

Next, a functional configuration of the information processing device 12 according to the present embodiment will be described with reference to Fig. 5. As shown in Fig. 5, the information processing device 12 includes a first derivation unit 40, a second derivation unit 42, a third derivation unit 44, and a control unit 46. The CPU 20 executes the recording program 30 to function as the first derivation unit 40, the second derivation unit 42, the third derivation unit 44, and the control unit 46.

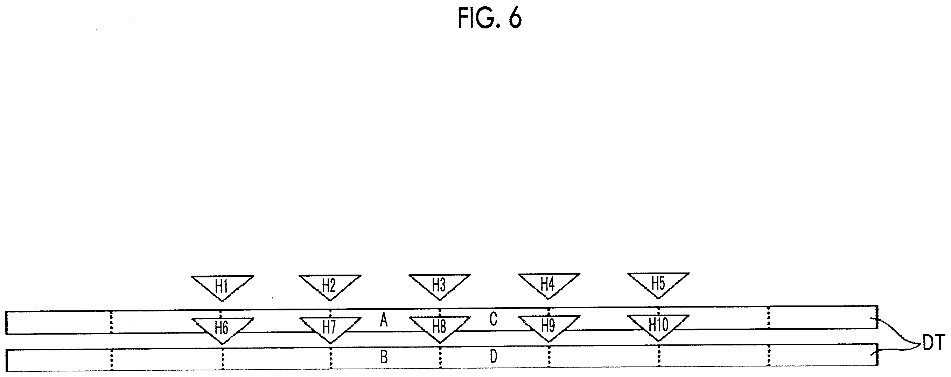

The first derivation unit 40 derives relevance of positions between different virtual blocks on the magnetic tape T (hereinafter, referred to as "inter-block relevance"). A specific example of processing of deriving the inter-block relevance by the first derivation unit 40 will be described with reference to Fig. 6.

First, the first derivation unit 40 divides the data track DT in which a plurality of data to be recorded can be recorded into a plurality of virtual blocks (hereinafter, referred to as "virtual block"). Fig. 6 shows an example in which the first derivation unit 40 divides two adjacent data tracks DT into the plurality of virtual blocks. A size of the virtual block is not particularly limited. For example, the first derivation unit 40 may adjust the size of the virtual block to a size of the minimum size data among the plurality of data to be recorded or to a size of the maximum size data. For example, the first derivation unit 40 may adjust the size of the virtual block to an average size of the plurality of data to be recorded. The size of the data in this case may be a size in consideration of a compression rate of the data in a case where the data is recorded on the magnetic tape T.

The first derivation unit 40 derives the inter-block relevance of the divided virtual blocks. In the present embodiment, the first derivation unit 40 derives, as the inter-block relevance, a larger value as a time required to read the data recorded in a virtual block, which is a derivation target of the inter-block relevance, is shorter in a case where the magnetic head H including the recording/reproducing element RWD is present at a predetermined position. In order to make the description easier to understand, a specific example of the processing of deriving the inter-block relevance of four virtual blocks A to D shown in Fig. 6 will be described.

For each combination of two virtual blocks among the virtual blocks A to D, the first derivation unit 40 derives a time required to read the data recorded in the two virtual blocks (hereinafter, referred to as "inter-block reading time"). In the present embodiment, the first derivation unit 40 derives the inter-block reading time with a time required to read the data for each operation unit, such as a time required to move one virtual block and a time required to move one virtual block to an adjacent data track DT, as one unit time.

As a specific example, the magnetic head H is present at a position HI shown in Fig. 6, and processing of deriving a time required for the magnetic head H to read the data recorded in the virtual blocks A and C will be described. In this case, one unit time is taken for the magnetic head H to move from the position HI to the position H2, one unit time is taken for reading the data recorded in the virtual block A, and one unit time is taken for reading the data recorded in the virtual block C. Therefore, the inter-block reading time of virtual blocks A and C is "3" (= 1 + 1 + 1).

Further, as a specific example, the magnetic head H is present at the position HI shown in Fig. 6, and processing of deriving a time required for the magnetic head H to read the data recorded in the virtual blocks A and B will be described. In this case, one unit time is taken for the magnetic head H to move from the position HI to the position H2 and one unit time is taken for reading the data recorded in the virtual block A. Then, one unit time is taken to stop the magnetic head H and to switch an advancing direction of the magnetic head H, one unit time is taken to move the magnetic head H to an adjacent data track DT, and one unit time is taken for reading the data recorded in the virtual block B. Therefore, the inter-block reading time of virtual blocks A and B is "5" (= 1 + 1 + 1 + 1 + 1).

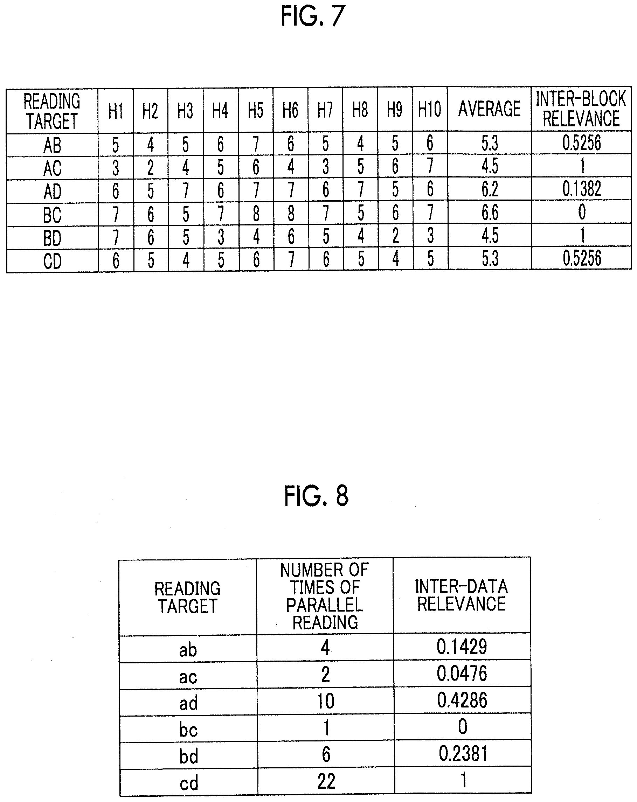

The first derivation unit performs the above processing of deriving the inter-block reading time in a case where the magnetic head H is present at each of a plurality of different positions HI to H10. Fig. 7 shows a list of inter-block reading times for each combination of the virtual blocks in the case where the magnetic head H is present at each of the positions HI to H10 shown in Fig. 6. The inter-block reading time may be an actually measured value measured in advance using an actual machine.

Next, the first derivation unit 40 derives an average value of the derived inter-block reading times for each combination of the virtual blocks. The first derivation unit 40 normalizes the average value derived for each combination of the virtual blocks with the maximum value as "0" and the minimum value as "1" to derive the inter-block relevance. That is, the inter-block relevance has a larger value as the average value is smaller. Fig. 7 also shows the average value and the inter-block relevance, which are derived by the first derivation unit 40. In the example of Fig. 7, the inter-block relevance between the virtual block A and the virtual block B is derived as 0.5256.

The second derivation unit 42 derives relevance between data (hereinafter, referred to as "inter-data relevance") representing a possibility that the plurality of data to be recorded on the magnetic tape T are read out in parallel. In the present embodiment, the second derivation unit 42 derives the inter-data relevance as a larger value as the possibility that the plurality of data to be recorded on the magnetic tape T are read out in parallel is higher. Hereinafter, as a specific example, a case where four data of data a to data d are to be recorded on the magnetic tape T will be described.

The second derivation unit 42 refers to the reading log 32. In a case where two data are read within a predetermined period (for example, 10 seconds), the second derivation unit 42 counts the number of times read in parallel (hereinafter, referred to as "the number of times of parallel reading"), regarding that the two data are read in parallel. The predetermined period in this case may be determined according to system characteristics or may be, for example, a longer period as a size of the data increases. The example of Fig. 8 represents that the data a and the data b are read four times in parallel.

The second derivation unit 42 normalizes the number of times of parallel reading counted for each combination of the data with the minimum value as "0" and the maximum value as "1" to derive the inter-data relevance. That is, the inter-data relevance has a larger value as the number of times of parallel reading increases. In the example of Fig. 8, the inter-data relevance between the data a and the data b is derived as 0.1429.

The third derivation unit 44 uses a difference between the inter-block relevance derived by the first derivation unit 40 and the inter-data relevance derived by the second derivation unit 42 to derive the virtual block for recording each of the plurality of data to be recorded. In the present embodiment, the third derivation unit 44 derives a virtual block having a minimum value according to the difference between the inter-block relevance and the inter-data relevance. Hereinafter, the details of the derivation processing by the third derivation unit 44 will be described.

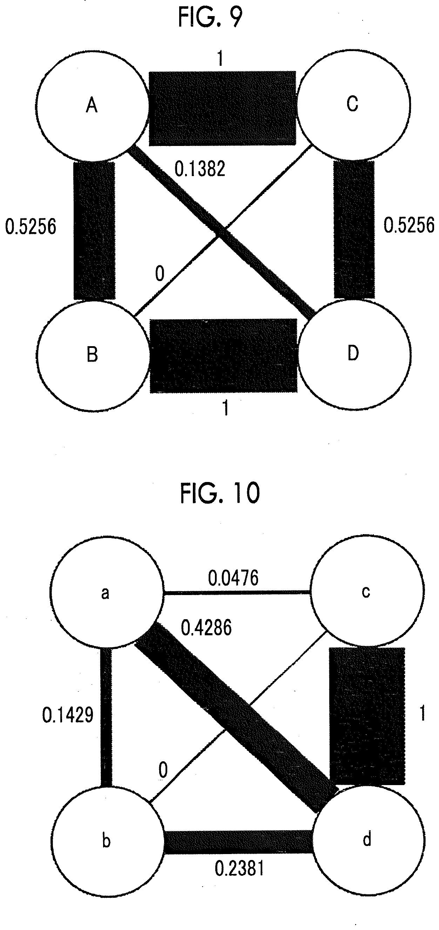

Fig. 9 shows an example of a schematic diagram representing the inter-block relevance of each virtual block as a network structure based on the inter-block relevance derived by the first derivation unit 40. There is the network structure in which a straight line connecting the virtual blocks is thicker as the inter-block relevance shown in Fig. 7 is high, in the example of Fig. 9.

Fig. 10 shows an example of a schematic diagram representing the inter-data relevance in a case where each of the plurality of data to be recorded is assumed to be recorded in any one of the virtual blocks, as a network structure. The example of Fig. 10 shows the network structure in a case where it is assumed that the data a is recorded in the virtual block A, the data b is recorded in the virtual block B, the data c is recorded in the virtual block C, and the data d is recorded in the virtual block D. There is the network structure in which a straight line connecting the data is thicker as the inter-data relevance shown in Fig. 8 is high, in the example of Fig. 10.

It is considered that a possibility that data having high inter-data relevance is recorded in a block having high inter-block relevance is higher as similarity between the network structure based on the inter-block relevance shown in Fig. 9 and the network structure based on the inter-data relevance shown in Fig. 10 is higher. That is, it is considered that a possibility that a plurality of data that are likely to be read out in parallel are written in a block at a position where the time required for reading the data is shortened is higher as the similarity therebetween is higher.

In the present embodiment, the third derivation unit 44 derives a combination of the plurality of data and the plurality of virtual blocks, which minimizes a difference between the network structure based on the inter-block relevance and the network structure based on the inter-data relevance (hereinafter, referred to as "network structure difference"). By obtaining this combination, the third derivation unit 44 derives the virtual block for recording each of the plurality of data to be recorded. This network structure difference corresponds to a value corresponding to the difference between the inter-block relevance and the inter-data relevance.

First, the third derivation unit 44 uses the inter-data relevance between each piece of data and corresponding inter-block relevance between the virtual blocks to derive a difference D between nodes in the network structure according to the following equation (1). Note that max (a,b) in the equation (1) represents the maximum value among a and b, and a^2 represents the square of a.
D = max (0,(inter-data relevance - inter-block relevance))^2 ... (1)

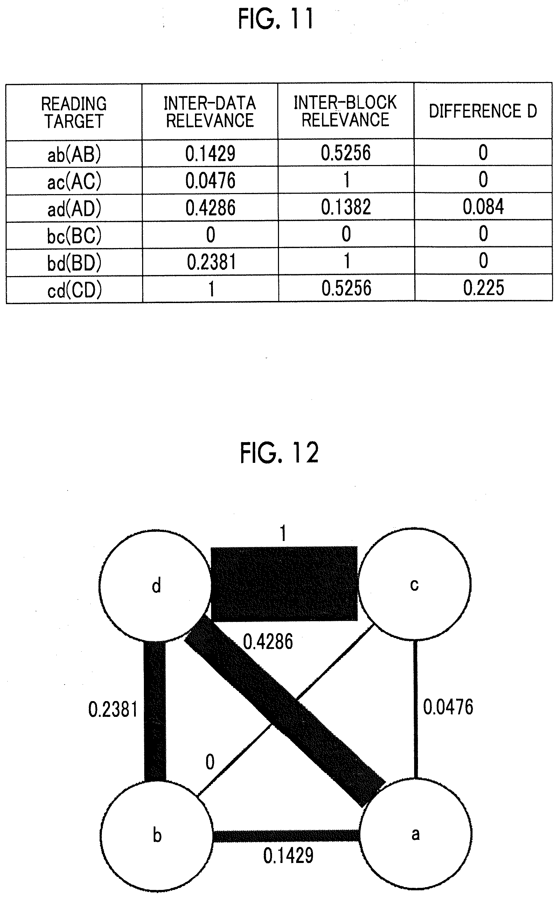

The difference D in the examples of Figs. 9 and 10 is shown in Fig. 11. The third derivation unit 44 derives an average value of the difference D as the network structure difference. In the example of Fig. 11, the network structure difference is 0.052 according to the following equation (2).
(0 + 0 + 0.084 + 0 + 0 + 0.225) ÷ 6 = 0.052 ... (2)

The third derivation unit 44 derives the network structure difference for all combinations of the plurality of data to be recorded and the virtual blocks of disposition destinations to derive a combination of the plurality of data and the virtual blocks in which the plurality of data are disposed, which minimizes the network structure difference. That is, the third derivation unit 44 derives the above combination that minimizes the network structure difference to derive the virtual block for recording each of the plurality of data. For example, Fig. 12 shows an example of the network structure in a case where it is assumed that the data d is recorded in the virtual block A, the data b is recorded in the virtual block B, the data c is recorded in the virtual block C, and the data a is recorded in the virtual block D, instead of the example of Fig. 10. In the example of Fig. 12, the network structure difference is 0.014.

The third derivation unit 44 does not have to derive the network structure difference for all the combinations. For example, the third derivation unit 44 may derive the network structure difference by changing the virtual block of the disposition destination of any one of two data having the maximum difference D to derive the combination that minimizes the derived network structure difference. In this case, the third derivation unit 44 may repeat this derivation processing until the network structure difference converges or may repeat this derivation processing a predetermined number of times.

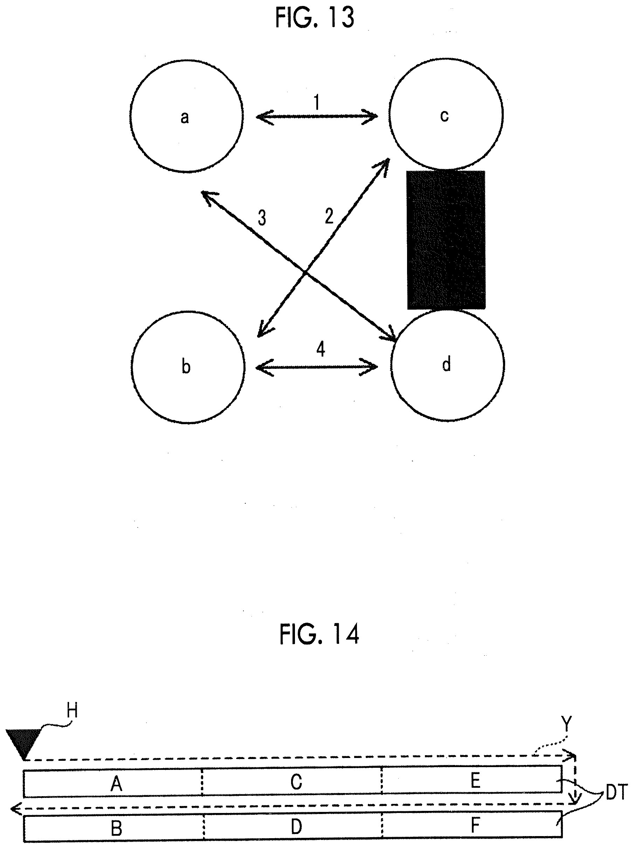

In this case, in the examples of Figs. 9 and 10, the third derivation unit 44 exchanges a disposition destination of the data c among the data c and the data d having the maximum difference D for a disposition destination of the data a to derive the network structure difference, as shown in Fig. 13. Similarly, the third derivation unit 44 exchanges the disposition destination of the data c among the data c and the data d having the maximum difference D for a disposition destination of the data b to derive the network structure difference. The third derivation unit 44 exchanges a disposition destination of the data d among the data c and the data d having the maximum difference D for the disposition destination of the data a to derive the network structure difference. Further, the third derivation unit 44 exchanges the disposition destination of the data d among the data c and the data d having the maximum difference D for the disposition destination of the data b to derive the network structure difference.

As described above, the third derivation unit 44 changes the disposition destination of any one of the two data having the maximum difference D to derive the network structure difference. Thus, the network structure difference after the change is likely to be smaller than the network structure difference before the change. Therefore, it is possible to reduce an amount of calculation in this case.

The control unit 46 performs control of recording the plurality of data on the magnetic tape T according to the virtual block derived by the third derivation unit 44 for each of the plurality of data to be recorded. Specifically, for example, a case where virtual blocks A to F are virtual blocks disposed as shown in Fig. 14 and the advancing direction of the magnetic head H is a direction indicated by an arrow Y will be described. In this case, the control unit 46 performs control of recording each of the plurality of data to be recorded on the magnetic tape T in an order corresponding to the virtual blocks A, C, E, F, D, and B, which is a passing order of the magnetic head H.

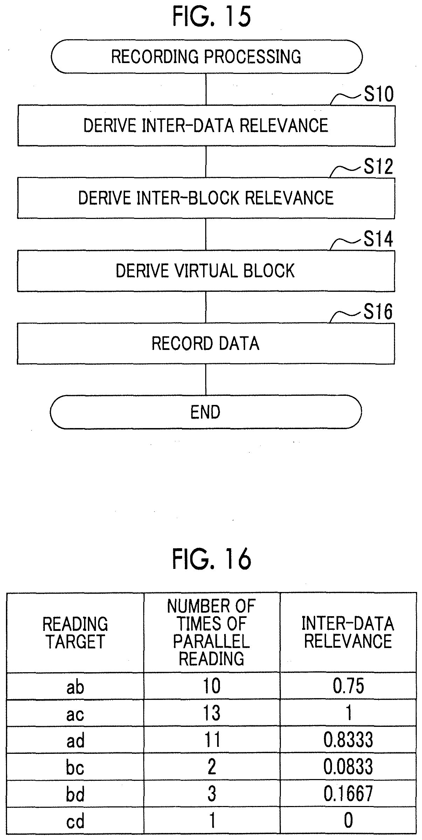

Next, an action of the information processing device 12 according to the present embodiment will be described with reference to Fig. 15. The CPU 20 executes the recording program 30 to execute recording processing shown in Fig. 15. The recording processing shown in Fig. 15 is executed, for example, in a case where a user inputs an instruction to record the data through the input unit 24.

In step S10 of Fig. 15, the second derivation unit 42 refers to the reading log 32 to count the number of times of parallel reading as described above. As described above, the second derivation unit 42 normalizes the number of times of parallel reading counted for each combination of the data with the minimum value as "0" and the maximum value as "1" to derive the inter-data relevance.

In step S12, as described above, the first derivation unit 40 divides the data track DT in which the data group to be recorded can be recorded into the plurality of virtual blocks to derive the inter-block relevance of the divided virtual blocks.

In step S14, as described above, the third derivation unit 44 uses the difference between the inter-block relevance derived in step S12 and the inter-data relevance derived in step S10 to derive the virtual block for recording each of the plurality of data to be recorded.

In step S16, as described above, the control unit 46 performs control of recording the plurality of data on the magnetic tape T according to the virtual block derived in step S14 for each of the plurality of data to be recorded. In a case where the processing of step S16 ends, the main recording processing ends.

As described above, according to the present embodiment, the difference between the inter-block relevance and the inter-data relevance is used to derive the virtual block for recording each of the plurality of data and to record the plurality of data on magnetic tape T according to the derived virtual blocks. Therefore, the data that is likely to be read in parallel can be recorded at a position having high relevance on the magnetic tape T. As a result, it is possible to shorten the reading time of the data recorded on the recording medium.

### [Second Embodiment]

A second embodiment of the disclosed technique will be described. The configuration of the recording/reading system 10 (refer to Fig. 1) and the hardware configuration of the information processing device 12 (refer to Fig. 3) according to the present embodiment are the same as those in the first embodiment, and thus the description thereof will be omitted.

Next, a functional configuration of the information processing device 12 according to the present embodiment will be described with reference to Fig. 5. As shown in Fig. 5, the information processing device 12 includes a first derivation unit 40A, a second derivation unit 42A, a third derivation unit 44A, and a control unit 46. The CPU 20 executes the recording program 30 to function as the first derivation unit 40A, the second derivation unit 42A, the third derivation unit 44A, and the control unit 46A.

The first derivation unit 40A has the following functions in addition to the functions of the first derivation unit 40 according to the first embodiment. In a case where there is data having inter-data relevance, derived by the second derivation unit 42A, equal to or higher than a predetermined threshold value for the plurality of data, the first derivation unit 40A derives inter-block relevance on the assumption that the data is duplicated. An example of the threshold value in this case includes a value experimentally determined as a lower limit value of a value in which the reading time is shortened by duplicating the data.

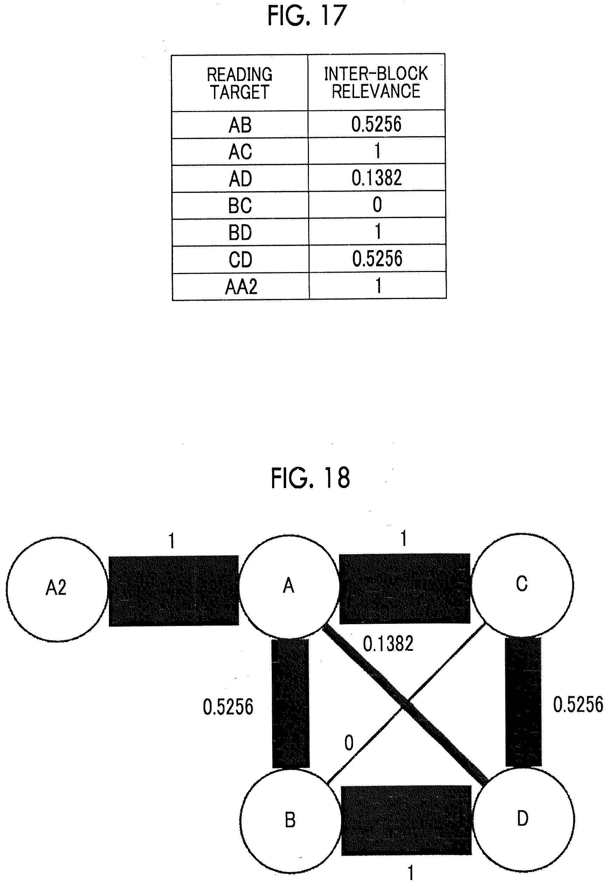

As a specific example, a case where there is data a having inter-data relevance equal to or higher than a predetermined threshold value (for example, 0.7) for the plurality of data b, c, and d will be described, as shown in Fig. 16. In this case, the first derivation unit 40A adds a virtual block A2 to which the data a is duplicated and then derives the inter-block relevance. In this case, Fig. 17 shows an example of the inter-block relevance derived by the first derivation unit 40A. In the example of Fig. 17, the virtual block A2 is added as a virtual block having the relevance with the virtual block A of 1.

Further, Fig. 18 shows an example of a schematic diagram representing the inter-block relevance shown in Fig. 17 as the network structure. In order to make the description easier to understand, a case where one piece of data a is duplicated (that is, two data a are recorded on the magnetic tape T) will be described, but two or more data a may be duplicated.

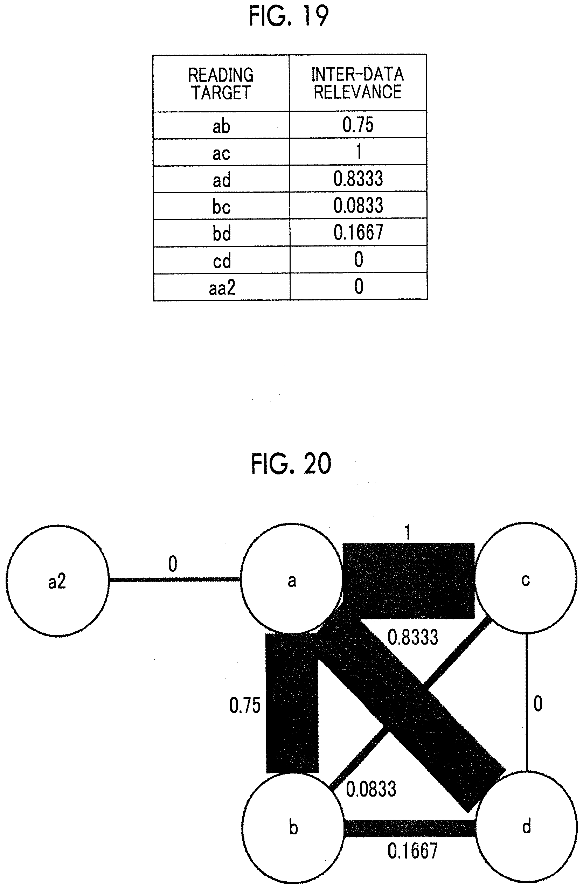

The second derivation unit 42A has the following functions in addition to the functions of the second derivation unit 42 according to the first embodiment. In a case where there is data having the derived inter-data relevance equal to or higher than the predetermined threshold value for the plurality of data, the second derivation unit 42A derives inter-data relevance on the assumption that the data is duplicated. In this case, the second derivation unit 42A adds data a2 which is a duplicate of the data a and then derives the inter-data relevance after. In this case, Fig. 19 shows an example of the inter-data relevance derived by the second derivation unit 42A. In the example of Fig. 19, the data a2 is added as data having the relevance with data a of 0.

Similarly to the third derivation unit 44 according to the first embodiment, the third derivation unit 44A uses a difference between the inter-block relevance derived by the first derivation unit 40A and the inter-data relevance derived by the second derivation unit 42A to derive the virtual block for recording each of the plurality of data to be recorded.

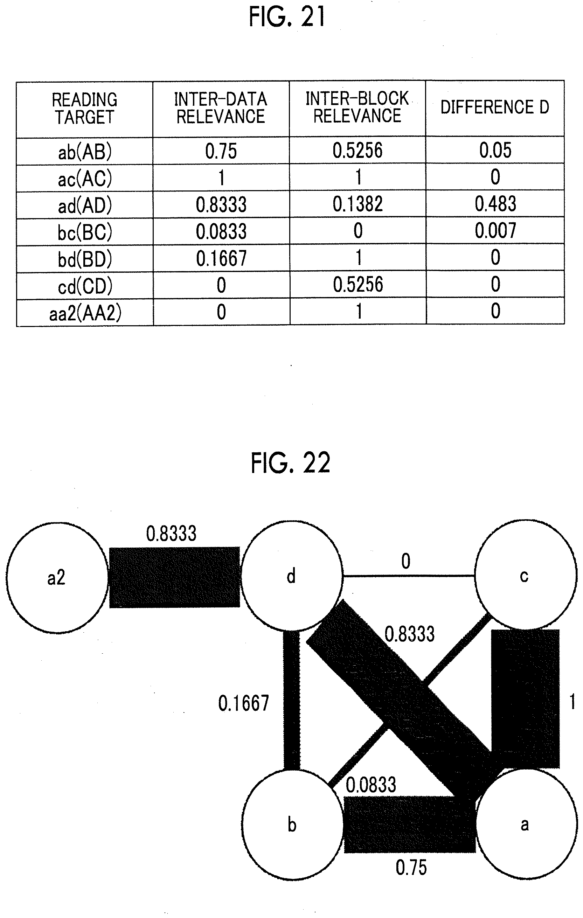

Fig. 20 shows an example of the network structure in a case where it is assumed that the data a is recorded in the virtual block A, the data a2 is recorded in the virtual block A2, the data b is recorded in the virtual block B, the data c is recorded in the virtual block C, and the data d is recorded in the virtual block D. The difference D in the examples of Figs. 18 and 20 is shown in Fig. 21. Further, the network structure difference in the example of Fig. 21 is 0.09 according to the following equation (3).
(0.05 + 0 + 0.483 + 0.007 + 0 + 0) ÷ 6 = 0.09 ... (3)

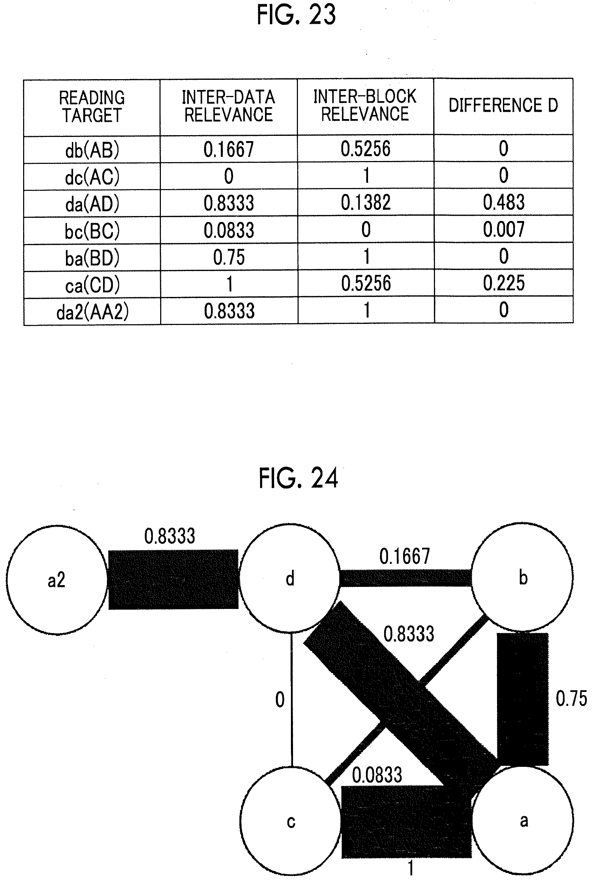

Fig. 22 shows a network structure in a case where the disposition destination of the data a and the disposition destination of the data d are exchanged from the state of Fig. 20. The difference D in the examples of Figs. 18 and 20 is shown in Fig. 23. The network structure difference in the example of Fig. 23 is 0.039 according to the following equation (4). Here, in a case where there are a plurality of combinations of the same data by duplication, a smaller difference D is employed. Specifically, in the example of Fig. 23, a difference D of "da2" is smaller than a difference D of "da", and thus the difference D of "da2" is employed.
(0 + 0 + 0 + 0.007 + 0 + 0.225) ÷ 6 = 0.039 ... (4)

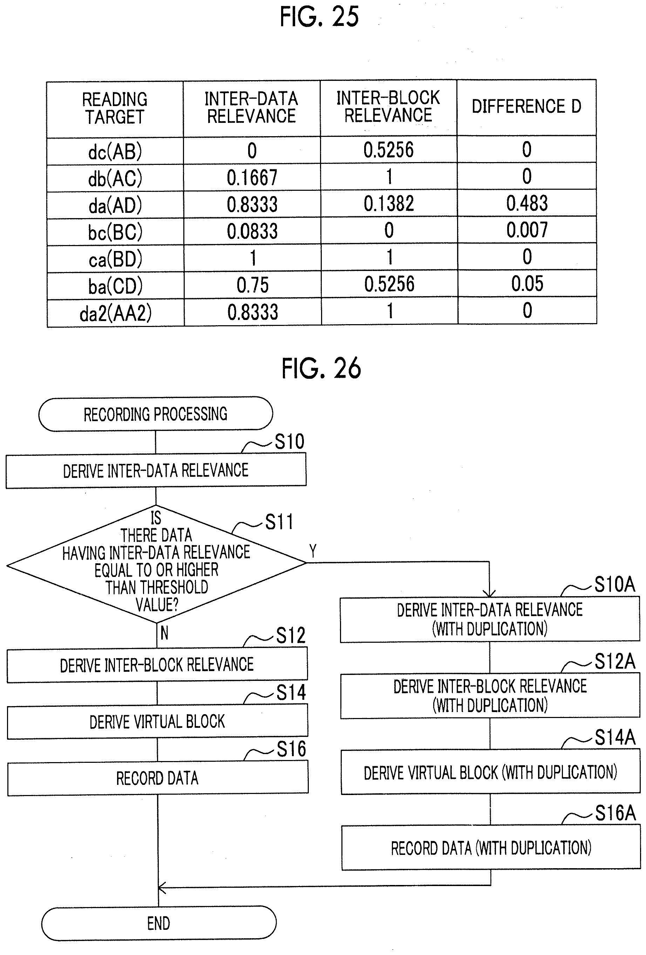

Fig. 24 shows a network structure in a case where the disposition destination of the data b and the disposition destination of the data c are exchanged from the state of Fig. 22. The difference D in the examples of Figs. 18 and 24 is shown in Fig. 25. The network structure difference in the example of Fig. 25 is 0.0095 according to the following equation (5).
(0 + 0 + 0 + 0.007 + 0 + 0.05) ÷ 6 = 0.0095 ... (5)

As described above, the third derivation unit 44A derives the virtual block having the minimum network structure difference for each of the plurality of data to be recorded while changing the combination of the data and the virtual block in which the data is disposed.

The control unit 46A has the following functions in addition to the functions of the control unit 46 according to the first embodiment. In a case where there is data having the inter-data relevance equal to or higher than the predetermined threshold value for the plurality of data, the control unit 46A duplicates the data and then performs control of recording the plurality of data on the magnetic tape T according to the virtual block derived by the third derivation unit 44A.

Next, an action of the information processing device 12 according to the present embodiment will be described with reference to Fig. 26. The CPU 20 executes the recording program 30 to execute the recording processing shown in Fig. 26. The recording processing shown in Fig. 26 is executed, for example, in a case where the user inputs the instruction to record the data through the input unit 24. The steps of performing the same processing as in Fig. 15 in Fig. 26 are designated by the same reference numerals and the description thereof will be omitted.

In step S11 of Fig. 26, the second derivation unit 42A determines whether or not there is data having inter-data relevance, derived in step S10, equal to or higher than the predetermined threshold value for the plurality of data. In a case where negative determination is made, the processing proceeds to step S12. In a case where affirmative determination is made, the processing proceeds to step S10A.

In step S10A, as described above, the second derivation unit 42A derives the inter-data relevance on the assumption that the data having the inter-data relevance equal to or higher than the predetermined threshold value is duplicated. In step S12A, as described above, the first derivation unit 40A derives the inter-block relevance on the assumption that the data having the inter-data relevance equal to or higher than the predetermined threshold value is duplicated.

In step S14A, as described above, the third derivation unit 44A uses the difference between the inter-block relevance derived in step S12A and the inter-data relevance derived in step S10A to derive the virtual block for recording each of the plurality of data to be recorded.

In step S16A, the control unit 46A duplicates the data having the inter-data relevance equal to or higher than the predetermined threshold value for the plurality of data and then performs control of recording the plurality of data on the magnetic tape T according to the virtual block derived in step S14A. In a case where the processing of step S16A ends, the main recording processing ends.

As described above, according to the present embodiment, the data that is likely to be read out in parallel with various data is duplicated and recorded on the magnetic tape T. Therefore, the data that is likely to be read in parallel can be recorded at the position having higher relevance on the magnetic tape T. As a result, it is possible to shorten the reading time of the data recorded on the recording medium.

In each of the above-described embodiments, the case where the magnetic tape is applied as a recording medium has been described, but the present invention is not limited thereto. A recording medium other than the magnetic tape may be applied as the recording medium.

In each of the above-described embodiments, the case where the 10 positions of positions HI to HI 0 are applied as initial positions of the magnetic head H has been described, but the present invention is not limited thereto. For example, as the initial positions of the magnetic head H, 9 or less positions may be applied or 11 or more positions may be applied. In a case where one position is applied as the initial position of the magnetic head H, a form in which a position corresponding to the head of the magnetic tape T is applied is exemplified. In a case where a plurality of positions are applied as the initial positions of the magnetic head H, the first derivation unit 40 may weight according to the probability that the magnetic head H is present at each position to derive the inter-block reading time.

Each method of the method of deriving the inter-block relevance, the method of deriving the inter-data relevance, and the method of deriving the network structure difference shown in each of the above embodiments is an example, and the present invention is not limited to the example shown in each of the above embodiments. For example, an artificial intelligence (AI) technique such as deep learning may be applied to at least one of the method of deriving the inter-block relevance, the method of deriving the inter-data relevance, or the method of deriving the network structure difference.

In each of the above-described embodiments, for example, the following various processors can be used as hardware structures of processing units that execute various pieces of processing, such as the first derivation units 40 and 40A, the second derivation units 42 and 42A, the third derivation units 44 and 44A, and the control units 46 and 46A. As described above, the various processors include a programmable logic device (PLD) which is a processor whose circuit configuration is changeable after manufacturing such as an FPGA, a dedicated electric circuit which is a processor having a circuit configuration exclusively designed to execute specific processing such as an application specific integrated circuit (ASIC), and the like, in addition to the CPU which is a general-purpose processor that executes software (program) to function as various processing units.

One processing unit may be configured by one of the various processors or a combination of two or more processors of the same type or different types (for example, a combination of a plurality of FPGAs or a combination of a CPU and an FPGA). A plurality of processing units may be configured by one processor.

As an example of configuring the plurality of processing units with one processor, first, there is a form in which one processor is configured by a combination of one or more CPUs and software and the processor functions as the plurality of processing units, as represented by computers such as a client and a server. Second, there is a form in which a processor that realizes the functions of the entire system including the plurality of processing units with one integrated circuit (IC) chip is used, as represented by a system-on-chip (SoC) or the like. As described above, the various processing units are configured using one or more of the various processors as the hardware structure.

Further, more specifically, a circuitry combining circuit elements such as semiconductor elements can be used as the hardware structure of the various processors.

In each of the above-described embodiments, the form in which the recording program 30 is stored (installed) in the storage unit 22 in advance has been described, but the present disclosure is not limited thereto. The recording program 30 may be provided in a form of being recorded on a recording medium such as a compact disc read only memory (CD-ROM), a digital versatile disc read only memory (DVD-ROM), and a Universal Serial Bus (USB) memory. The recording program 30 may be downloaded from an external device through a network.

## Claims

1. A recording device comprising:
a first derivation unit that derives relevance of positions between different virtual blocks on a recording medium;
a second derivation unit that derives inter-data relevance representing a possibility that a plurality of items of data to be recorded on the recording medium are read out in parallel;
a third derivation unit that uses a difference between the relevance of the positions and the inter-data relevance to derive a block for recording each of the plurality of items of data; and
a control unit that performs control of recording the plurality of items of data on the recording medium according to the block derived by the third derivation unit for each of the plurality of items of data.

2. The recording device according to claim 1,
wherein the relevance of the positions has a larger value as a time required to read the data recorded in the different blocks is shorter in a case in which a reproducing element that reads the data recorded on the recording medium is present at a predetermined position,
the inter-data relevance has a larger value as the possibility that the plurality of items of data are read out in parallel is higher, and
the third derivation unit derives the block having a minimum value corresponding to the difference.

3. The recording device according to claim 2,
wherein the relevance of the positions has a larger value as an average value of the times is smaller in a case in which the reproducing element is present at each of a plurality of different predetermined positions.

4. The recording device according to any one of claims 1 to 3,
wherein in a case in which there is data having the inter-data relevance equal to or higher than a threshold value for a plurality of data, the first derivation unit derives the relevance of the positions and the second derivation unit derives the inter-data relevance on an assumption that the data having the inter-data relevance equal to or higher than the threshold value is duplicated.

5. The recording device according to any one of claims 1 to 4,
wherein the recording medium is a magnetic tape.

6. A recording method executed by a computer, the method comprising:
deriving relevance of positions between different virtual blocks on a recording medium;
deriving inter-data relevance representing a possibility that a plurality of items of data to be recorded on the recording medium are read out in parallel;
using a difference between the relevance of the positions and the inter-data relevance to derive a block for recording each of the plurality of items of data; and
performing control of recording the plurality of items of data on the recording medium according to the block derived for each of the plurality of items of data.

7. A recording program causing a computer to perform a process comprising:
deriving relevance of positions between different virtual blocks on a recording medium;
deriving inter-data relevance representing a possibility that a plurality of items of data to be recorded on the recording medium are read out in parallel;
using a difference between the relevance of the positions and the inter-data relevance to derive the block for recording each of the plurality of items of data; and
performing control of recording the plurality of items of data on the recording medium according to the block derived for each of the plurality of items of data.

8. A magnetic tape configured such that a plurality of items of data according to a block for recording each of the plurality of items of data, which is derived using a difference between relevance of positions between different virtual blocks on the magnetic tape and inter-data relevance representing a possibility that the plurality of items of data to be recorded on the magnetic tape are read out in parallel.
